# EUROPEAN PATENT SPECIFICATION

(11) **EP 0 552 468 B1**
(45) Date of publication and mention of the grant of the patent: **02.08.1995**
(21) Application number: 92121302.1
(22) Date of filing: 15.12.1992
(51) Int. Cl.: B60K 15/00, B23K 26/00, B23K 33/00

(54) **Motor vehicle fuel tank and processes for its construction**
Kraftstoffbehälter eines Fahrzeuges und Verfahrens zu seiner Herstellung
Réservoir de combustible pour voitures et procédés pour sa fabrication

(30) Priority: 24.12.1991 IT TO911036
(43) Date of publication of application: 28.07.1993
(73) Proprietor: FIAT AUTO S.p.A., 10135 Torino (IT)
(72) Inventor: Da Re', Mario, I-10100 Torino (IT)
(74) Representative: Lotti, Giorgio

(56) References cited:
- EP-A- 0 383 040
- EP-B- 0 098 306
- US-A- 3 632 009
- PATENT ABSTRACTS OF JAPAN vol. 9, no. 38 (M-358)(1761) 19 February 1985 & JP-A-59 179 284 (FUTABA SANGYO K.K.) 11 October 1984
- PATENT ABSTRACTS OF JAPAN vol. 9, no. 290 (M-430)(2013) 16 November 1985 & JP-A-60 130 462 (MATSUSHITA DENKI SANGYO K.K.) 11 July 1985

## Description

This invention relates to a motor fuel tank and laser welding processes for it construction.

Motor vehicle fuel tanks are currently formed from two complementary half-shells of steel plate joined together by continuous electric welding. For this metod, each half-shell must comprise a horizontal perimetral flange or several horizontal flanges spaced equally apart, between which the weld is applied. These flanges have however the drawback of occupying a space in plan view which cannot contribute to the containing capacity of the tank.

From US-A-3 632 009 is known a water tank consisting of two complementary shells welded together along their edges, the edges of at least one shell are made to diverge in order to receive the other shell. The joint between the component half-shells of this tank does not occupy ineffective space in plan view. This metod of welding, however seem to have problems in positioning the two parts always in a predetermined position for the series production, due to the fact that the two edges diverge so that one edge fits against the inner surface of the other edge, also causing insertion problems.

An object of the invention is to obtain tanks which can be welded with great precision to hence achieve good dimensional constancy in series production.

A further object of the invention is to propose two different alternative laser welding processes, which can be both advantageously effected using the half-shells proposed by the present invention.

A further object of the present invention is to propose two alternative fuel tanks made with processes which enable the two half-shells to be welded together exploiting to their maxim extent the advantages offered by laser welding.

These and further objects and advantages, which will be more apparent hereinafter, are attained according to the invention by a motor vehicle fuel tank of the type consisting of two complementary half-shells welded together along their edges, the edges of at least one of said half-shells being made to diverge, characterized in that, in order to receive and abuttingly support the edges of the other half-shell, said edges diverge in such a manner as to form an open perimetral pocket between said edges of the two half-shells, the constituent parts of said perimetral pocket being melt together by means of a laser beam, hence achieving continuous fusion of the two pieces along their entire perimeter.

Further objects are attained according to the invention by a motor vehicle fuel tank of the type consisting of two complementary half-shells welded together along their edges, the edges of at least one of said half-shells being made to diverge, characterized in that, in order to receive and abuttingly support the edges of the other half-shell, said edges diverge in such a manner as to form an open perimetral pocket between said edges of the two half-shells, said perimetral pocket being filled by a solder bead arranged along the mouth of said perimetral pocket and melted by means of a laser beam, so as to join the two half-shells together.

Further according to the invention, the two said half-shells are welded together by a laser apparatus which in a first method of application is focused onto the second half-shell in a position corresponding with said abutment zone, with consequent welding by melting the constituent material of the edges of the two half-shells.

Alternatively, the laser source is focused onto a bead of weld material arranged in the pocket defined between the edges of the two half-shells, hence welding them together.

The tank and the welding processes according to the invention are described hereinafter with reference to the accompanying drawings, in which:
Figure 1 is a partial section in a vertical plane, through a tank according to the invention;
Figure 2 is a section through the tank of Figure 1 during a stage in the welding.

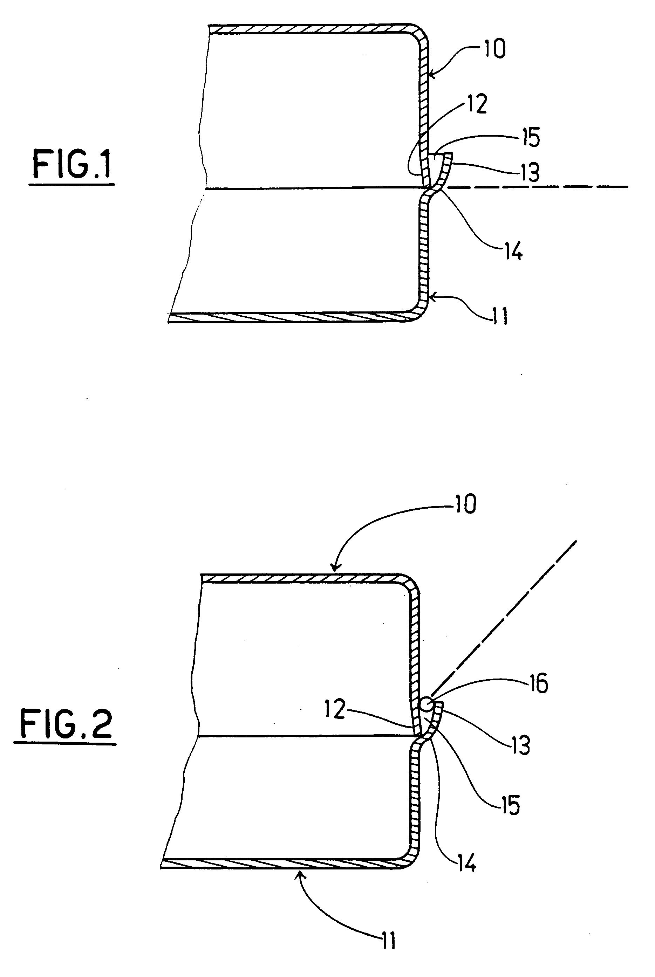

With reference initially to Figure 1, according to the invention the proposed tank is formed by joining together two complementary half-shells 10 and 11, preferably obtained from steel plate by cold pressing, using the same number of operations as currently used for traditional shapes.

The upper half-shell 10, the edges 12 of which diverge slightly outwards, is superposed on the lower half-shell 11, the edges 13 of which diverge more widely outwards to form an arch 14 which acts as an abutment for the edges 12 of the upper half-shell 10 when this is inserted into the lower half-shell.

When the two half-shells 10 and 11 have been superposed, according to the invention they are joined together by laser welding along their perimetral joining area.

Again with reference to Figure 1, a first welding process according to the invention can be implemented without weld material. In this respect, the particular shape of the half-shell edges 12 and 13 is suitable for forming the necessary interference to allow this first type of laser welding. The laser beam (shown by a dashed line in Figure 1) is focused into the arch 14 in a direction substantially coinciding with the plane in which the two half-shells abut, to melt the constituent metal of the edge 13 of the half-shell 11 and of the edge 12 of the half-shell 10, hence achieving continuous fusion of the two pieces along their entire perimeter.

As can be seen from the figures, the shape of the half-shell edges 12 and 13 is such as to define a perimetral pocket 15 of V cross-section.

An advantageous but non-limiting example of the application of this first process uses a laser source of the following characteristics:
- source: Neodymium-Yag;
- power: 1000-3000 W;
- spot diameter: 0.1-0.2 mm;
- angle of incidence: 90 degrees;
- advancement speed: 1-5 m/min.

With reference to Figure 2, in a second fusion process according to the present invention, when the half-shells 10 and 11 have been superposed, a solder bead 16 is arranged along the mouth of the perimetral pocket 15.

In this alternative process, the laser beam (shown by a dashed line in Figure 2) is focused onto the bead 16 preferably at an angle of incidence of about 45 degrees to the horizontal. In this manner the solder melts to continuously fill the pocket 15 and rigidly join the two half-shells 10 and 11 together.

An advantageous but non-limiting example of the application of this second process uses a laser source of the following characteristics:
- source: CO₂;
- power: 500-1000 W;
- spot diameter: 0.2-0.4 mm;
- angle of incidence: 45 degrees;
- advancement speed: 5-15 m/min.

The two processes illustrated in the figures have different economical advantages: the first has a lower process cost because of the absence of weld material and the relative installation; the second however requires a less powerful and hence less costly laser source to achieve melting of the solder instead of the steel of the half-shells.

Although only one embodiment of the tank has been described and illustrated on the drawings, the invention is not limited to this particular embodiment, and modifications can be made thereto by an expert of the art to form various embodiments, without leaving the scope of the invention and its range of protection as defined by the following claims.

## Claims

1. A motor vehicle fuel tank of the type consisting of two complementary half-shells welded together along their edges, the edges (13) of at least one (11) of said half-shells being made to diverge, characterized in that, in order to receive and abuttingly support the edges (12) of the other half-shell (10), said edges (13) diverge in such a manner as to form an open perimetral pocket (15) between said edges (12,13) of the two half-shells (10,11),the constituent parts of said perimetral pocket (15) being melt together by means of a laser beam, hence achieving continuous fusion of the two pieces (10,11) along their entire perimeter.

2. A motor vehicle fuel tank of the type consisting of two complementary half-shells welded together along their edges, the edges (13) of at least one (11) of said half-shells being made to diverge, characterized in that, in order to receive and abuttingly support the edges (12) of the other half-shell (10), said edges (13) diverge in such a manner as to form an open perimetral pocket (15) between said edges (12,13) of the two half-shells (10,11), said perimetral pocket (15) being filled by a solder bead (16) arranged along the mouth of said perimetral pocket (15) and melted by means of a laser beam, so as to join the two half-shells (10,11)together.

3. A tank as claimed in claim 1, characterised in that the edges (12) of the upper half-shell (10) diverge slightly, whereas the edges (13) of the lower half-shell (11) diverge more greatly outwards to receive the edges (12) of the upper half-shell (10).

4. A tank as claimed in claims 1 and 2, characterised in that the perimetral pocket (15) surrounds the tank externally, and is of V-shape with its opening facing upwards.

5. A welding process for the motor vehicle fuel tank claimed in claims 1, 3 and 4, in which the two half-shells (10, 11) are coupled together by inserting the edges (12) of the first half-shell (10) inside the edges (13) of the second half-shell (11) until the edges (12) of the first half-shell abut (14) against the diverging edges (13) of the second half-shell (11), the process being characterised by welding the two half-shells (10, 11) together by focusing a laser source externally onto the second half-shell (11) in a position corresponding with said abutment zone (14), with consequent welding by melting the constituent material of the edges (12, 13) of the two half-shells (10, 11).

6. A welding process for the motor vehicle fuel tank claimed in claims 2 to 4, in which the two half-shells (10, 11) are coupled together by inserting the edges (12) of the first half-shell (10) inside the edges (13) of the second half-shell (11) until the edges (12) of the first half-shell abut (14) against the diverging edges (13) of the second half-shell (11), the process being characterised by arranging a bead (16) of weld material within the pocket (15) defined between the edges (12) of the first half-shell (10) and welding the edges (12, 13) of the two half-shells (10, 11) together by focusing a laser source onto said bead (16).

## Patentansprüche

1. Fahrzeugkraftstoffbehälter von dem Typ, der aus zwei komplementären Halbschalen gebildet ist, die entlang ihren Rändern zusammengeschweißt sind, wobei die Ränder (13) von mindestens einer (11) der Halbschalen so ausgebildet sind, daß sie divergieren, dadurch gekennzeichnet,
daß die Ränder (13) so divergieren, daß sie eine offene, perimetrale Tasche (15) zwischen den Rändern (12, 13) von den beiden Halbschalen (10, 11) bilden, um die Ränder (12) der anderen Halbschale (10) aufzunehmen und auf Stoß zu tragen, wobei die Grundbestandteile der perimetralen Tasche (15) mittels eines Laserstrahls zusammengeschweißt sind, wodurch eine durchgehende Verschmelzung der beiden Teile (10, 11) über ihrem gesamten Umfang erreicht wird.

2. Fahrzeugkraftstoffbehälter von dem Typ, der aus zwei komplementären Halbschalen gebildet ist, die entlang ihren Rändern zusammengeschweißt sind, wobei die Ränder (13) von mindestens einer (11) der Halbschalen so ausgebildet sind, daß sie divergieren, dadurch gekennzeichnet,
daß die Ränder (13) so divergieren, daß sie eine offene, perimetrale Tasche (15) zwischen den Rändern (12, 13) von den beiden Halbschalen (10, 11) bilden, um die Ränder (12) der anderen Halbschale (10) aufzunehmen und auf Stoß zu tragen, wobei die perimetrale Tasche (15) mit einer Lötraupe (16) gefüllt ist, die entlang der Öffnung der perimetralen Tasche (15) angeordnet ist und mittels eines Laserstrahls geschmolzen wird, um die beiden Halbschalen (10, 11) miteinander zu verbinden.

3. Behälter nach Anspruch 1, dadurch gekennzeichnet, daß die Ränder (12) der oberen Halbschale (10) leicht divergieren, wobei die Ränder (13) der unteren Halbschale (11) stärker nach außen divergieren, um die Ränder (12) der oberen Halbschale (10) aufzunehmen.

4. Behälter nach den Ansprüchen 1 und 2, dadurch gekennzeichnet, daß die perimetrale Tasche (15) den Behälter außen umgibt und V-förmig ist, wobei ihre Öffnung nach oben gewandt ist.

5. Schweißverfahren für den in den Ansprüchen 1, 3 und 4 beanspruchten Fahrzeugkraftstoffbehälter, bei dem die beiden Halbschalen (10, 11) miteinander gekoppelt werden, indem die Ränder (12) der ersten Halbschale (10) in die Ränder (13) der zweiten Halbschale (11) eingefügt werden, bis die Ränder (12) der ersten Halbschale gegen die divergierenden Ränder (13) der zweiten Halbschale (11) stoßen (14), wobei das Verfahren gekennzeichnet ist durch Zusammenschweißen der beiden Halbschalen (10, 11) durch Fokussieren einer Laserquelle außen auf der zweiten Halbschale (11) an einer Stelle, die der Stoßzone (14) entspricht, wobei konsequent verschweißt wird, indem das Grundmaterial der Ränder (12, 13) der beiden Halbschalen (10, 11) geschmolzen wird.

6. Schweißverfahren für den in den Ansprüchen 2 bis 4 beanspruchten Fahrzeugkraftstoffbehälter, bei dem die beiden Halbschalen (10, 11) miteinander gekoppelt werden, indem die Ränder (12) der ersten Halbschale (10) in die Ränder (13) der zweiten Halbschale (11) eingefügt werden, bis die Ränder (12) der ersten Halbschale gegen die divergierenden Ränder (13) der zweiten Halbschale (11) stoßen (14), wobei das Verfahren gekennzeichnet ist durch
Anordnen einer Raupe (16) aus Schweißmaterial in der Tasche (15), die zwischen den Rändern (12) der ersten Halbschale (10) definiert ist, und durch Zusammenschweißen der Ränder (12, 13) der beiden Halbschalen (10, 11), indem eine Laserquelle auf der Raupe (16) fokussiert wird.

## Revendications

1. Réservoir à carburant d'un véhicule à moteur, du type consistant en deux hémi-coquilles complémentaires soudées l'une à l'autre le long de leurs bords, les bords (13) d'au moins l'une (11) de ces deux hémi-coquilles étant divergents, caractérisé en ce que, afin de recevoir et de supporter en butée les bords (12) de l'autre hémi-coquille (10), ces bords (13) divergent de manière à former entre les bords (12, 13) des deux hémi-coquilles (10, 11), une poche (15) périmétrique ouverte, les parties constitutives de cette poche (15) périmétrique étant fondues ensemble au moyen d'un faisceau laser, en obtenant ainsi une fusion continue des deux hémi-coquilles (10, 11) le long de tout leur périmètre.

2. Réservoir à carburant d'un véhicule à moteur, du type consistant en deux hémi-coquilles complémentaires soudées l'une à l'autre le long de leurs bords, les bords (13) d'au moins l'une (11) des hémi-coquilles étant divergents, caractérisé en ce que, afin de recevoir et de supporter en butée les bords (12) de l'autre hémi-coquille (10), ces bords (13) divergent de manière à former, entre les bords (12, 13) des deux hémi-coquilles (10, 11), une poche (15) périmétrique ouverte, cette poche (15) périmétrique étant emplie d'un cordon (16) de brasage, qui est disposé le long de l'embouchure de la poche (15) périmétrique et qui est fondu au moyen d'un rayon laser, de manière à joindre les deux hémi-coquilles (10, 11)l'une à l'autre.

3. Réservoir selon la revendication 1, caractérisé en ce que les bords (12) de l'hémi-coquille (10) supérieure divergent légèrement, tandis que les bords (13) de l'hémi-coquille (11) inférieure divergent de manière plus accentuée vers l'extérieur afin de recevoir les bords (12) de l'hémi-coquille (10) supérieure.

4. Réservoir selon la revendication 1 ou 2, caractérisé en ce que la poche (15) périmétrique entoure le réservoir à l'extérieur et a une forme en V ayant son ouverture dirigée vers le haut.

5. Procédé de soudage du réservoir à carburant d'un véhicule à moteur selon l'une des revendications 1, 3 ou 4, qui consiste à coupler les deux hémi-coquilles (10, 11) l'une à l'autre en insérant les bords (12) de la première hémi-coquille (10) à l'intérieur des bords (13) de la seconde hémi-coquille (11) jusqu'à ce que les bords (12) de la première hémi-coquille viennent buter (14) sur les bords (13) divergents de la seconde hémi-coquille (11), ce procédé étant caractérisé en ce qu'il consiste à souder les deux hémi-coquilles (10, 11) l'une à l'autre en focalisant une source laser extérieurement sur la seconde hémi-coquille (11) dans une position correspondant à la région (14) de butée, le soudage résultant de la fusion de la matière constituant les bords (12, 13) des deux hémi-coquilles (10, 11).

6. Procédé de soudage d'un réservoir à carburant d'un véhicule à moteur selon l'une des revendications 2 à 4, qui consiste à coupler les deux hémi-coquilles (10, 11) l'une à l'autre en insérant les bords (12) de la première hémi-coquille (10) à l'intérieur des bords (13) de la seconde hémi-coquille (11) jusqu'à ce que les bords (12) de la première hémi-coquille viennent buter (14) sur les bords (13) divergents de la seconde hémi-coquille (11), le procédé étant caractérisé en ce qu'il consiste à disposer un cordon (16) de matière de brasage dans la poche (15) définie entre les bords (12) de la première hémi-coquille (10) et à souder les bords (12, 13) des deux hémi-coquilles (10, 11) les uns aux autres en focalisant une source laser sur le cordon (16).
